# EUROPEAN PATENT APPLICATION

(11) **EP 1 355 309 A1**
(43) Date of publication of application: **22.10.2003**
(21) Application number: 02715742.9
(22) Date of filing: 16.01.2002
(51) Int. Cl.: G11B 20/10, G11B 20/12, G10K 15/02, G09C 1/00

(54) **RECORDING MEDIUM, INFORMATION PROCESSING DEVICE, CONTENT DISTRIBUTION SERVER, METHOD, PROGRAM, AND ITS RECORDING MEDIUM**

(30) Priority: 25.01.2001 JP 2001017511; 15.01.2002 JP 2002006280
(71) Applicant: Sony Computer Entertainment Inc., Tokyo 107-0052 (JP)
(72) Inventor: TANAKA, Makoto, c/o SONY COMP. ENTERTAINMENT INC., Tokyo 107-0052 (JP); INUI, Tsutomu, c/o SONY COMP. ENTERTAINMENT INC., Tokyo 107-0052 (JP)
(74) Representative: Manitz, Finsterwald & Partner
(86) International application number: JP0200216
(87) International publication number: WO02059894

(57) **Abstract**

To provide a technique that ensures detection of alternation, if any, of management information stored on a data storage and verifies the validity of the data storage.

In an information processing system 20 for use in verifying the validity of a data storage 10 having a first storage area in which an original version of management information is stored and a second storage area in which an encrypted version of the management information is stored, the information processing system 20 comprises a controlling unit (24, 26) adapted to read the original version of the management information and the encrypted version of the management information out of the data storage to control decryption of the read encrypted version of the management information; and a comparing unit (25) adapted to determine whether the original version of the management information and the decrypted management information are in a predetermined relationship with each other and validate the data storage when the determination is affirmative.

## Description

### Technical Field

The present invention relates to the management of a data storage and to a content distribution system implementing such management features.

### Background Art

Information storage devices or media such as hard disk devices (hereinafter, collectively referred to as a data storage) often contain information used to manage the data storage itself (hereinafter collectively referred to as management information).

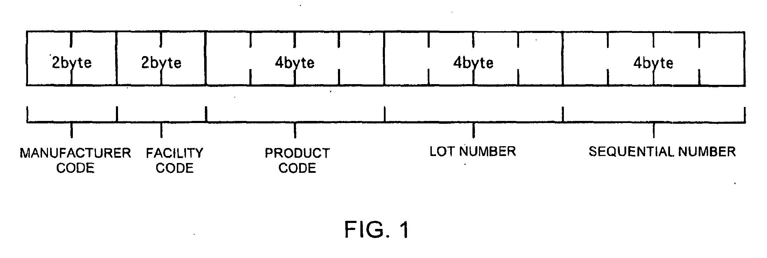

Fig. 1 shows an exemplified product ID (in the industry also referred to as a serial number) used as the management information. The illustrated product ID is 16 bytes in length and is comprised of the following: a two-byte manufacturer code, a two-byte facility code, a four-byte product code, a four-byte lot number, and a four-byte sequential number. The manufacturer code is a unique code assigned to each manufacturer or company which distributes data storage products. All data storage products manufactured by a given company will use the same manufacturer code. The facility code is a unique code assigned to each facility or factory where data storage products are manufactured. All data storage products manufactured at a given facility will use the same facility code. The product code is a unique code assigned by the manufacturer indicating, for example, a type, a production number, and/or a version number of a given data storage product. The manufacturer is free to assign product codes to each of their products. The lot number is a unique single number or set of numbers assigned to each production lot. The sequential number is a unique identifier for a specific sequential publication in a given production lot.

The management information is useful for quality control of data storage. For example, pinpointing the production facility and the production lot where a defective product is included, if any, would be useful for quality control, client/customer management, after-sale service, and other follow-ups.

Conventionally, the management information is written in an accessible area using a popular coding scheme during production of the data storage. The term "accessible area" as used herein refers to any storage area in the data storage, including a so-called administrative region, that a user can access through a common information processing system and a read/write device in a personal computer or a drive. The term "popular coding scheme" as used herein refers to those available for the common read/write device and includes ASCII (American Standard Code for Information Interchange) and JIS (Japan Industrial Standards) coding schemes.

As apparent from the above, the management information is stored on the data storage in a user-accessible format. This means that a user may look up and alter the management information. Otherwise, the management information may be erased or altered accidentally. In order to avoid alteration of the management information by a user, the management information may be stored in (1) a storage area where the user does not normally have access through, for example, a common read/write device, or (2) a storage device such as a read-only memory (ROM) that is written once and cannot be overwritten or changed.

However, the first approach is not enough to prevent intentional alteration of the management information because a malicious user may figure out how to overwrite it on the data storage. Once the way of altering the information is unveiled, the management information becomes unreliable. The second approach is more resistant against the intentional alteration. However, a device that cannot be overwritten should be added to the data storage at a production cost penalty and, at any rate, the device is completely helpless when a malicious user removes and/or changes it as a whole. Quality control using the management information is unfeasible under such circumstances that the management information can be altered easily. The same applies to the client/customer management.

Accordingly, it is an object of the present invention to provide a technique that ensures detection of alteration, if any, of management information stored on a data storage and verifies the validity of the data storage.

It is another object of the present invention to provide a data storage with which any alteration of the management information thereon can be successfully detected and the validity of the data storage can be verified without any failure, as well as to provide a method and a system therefor.

It is still another object of the present invention to provide a system and a method for the distribution of electronic content, based on the technique of detecting alteration of the management information on the data storage and of verifying the data storage.

It is yet another object of the present invention to provide a computer program used to implement the above-mentioned method in cooperation with an information processing system, and a computer-readable data storage on which the program is stored.

### Disclosure of Invention

A data storage according to an embodiment of the present invention that solves the above-mentioned problems comprises a first storage area for storing an original version of management information and a second storage area for storing an encrypted version of the management information.

The term "data storage" as used herein means any information storage/data storage having a recordable area. Examples of the data storage include, but not limited to, hard disk devices, flexible disks, recordable CD-ROMs, DVD-RAMs, magnetic tapes, magneto-optical disks, RAM memory cartridges with battery backups, Flash Memory (trademark) cartridges, and other non-volatile memory cartridges. The term "management information" as used herein refers to the information used to distinguish a certain data storage from others. A typical example of the management information is a product ID.

The data storage may further have another encrypted version of the management information stored in an appropriate storage area or areas (third, fourth, ..., n-th storage areas) thereof. The encrypted version of the management information thus stored separately may be encrypted with a different encryption key from the one used for the encryption of the management information stored in the second storage area. Alternatively, these pieces of the management information may be encrypted using different encryption schemes.

Amethod for manufacturing a data storage according to an embodiment of the present invention that solves the above-mentioned problems comprises the steps of writing an original version of management information into a first storage area in the data storage; and writing an encrypted version of the management information into a second storage area in the data storage.

In this method for manufacturing the data storage, the encrypted version of the management information may further be stored in an additional storage area or areas (third, fourth, ..., n-th storage areas) of the data storage. The encrypted version of the management information thus stored separately may be encrypted with a different encryption key from the one used for the encryption of the management information stored in the second storage area. Alternatively, these pieces of the management information may be encrypted using different encryption schemes.

A process for verifying the validity of the data storage according to an embodiment of the present invention that solves the above-mentioned problems is a process carried out in an information processing system comprising, reading an original version of management information stored on the data storage to be verified and an encrypted version of the management information; decrypting the encrypted version of the management information; and comparing the original version of the management information and the decrypted management information, wherein the data storage subjected to verification is determined as valid when the comparison result indicates that the original version of the management information and the decrypted management information are in a predetermined relationship with each other. The "predetermined relationship" is considered to be established when any one of the following applies: (1) the original version of the management information completely coincides or matches with the decrypted management information; (2) portions of the original version of the management information coincide or match with the corresponding portions of the decrypted management information; and (3) a certain correspondence can be given between the two according to a certain rule.

In the verification of the validity, the management information may be encrypted with an encryption scheme using secret key information, and the decryption is performed, when necessary, with that secret key information.

When the data storage has two or more encrypted versions of the management information stored thereon, all of the encrypted versions of the management information may be read in the reading step and decrypted to validate the data storage only when two or more pieces of the decrypted management information are all in a predetermined relationship with the original version of the management information.

A system for verifying the validity of a data storage according to an embodiment of the present invention that solves the above-mentioned problems is a system for verifying the validity of a data storage having a first storage area for storing an original version of management information and a second-storage area for storing an encrypted version of the management information. This system comprises a controlling unit adapted to read the original version of the management information and the encrypted version of the management information out of the data storage and control decryption of the encrypted version of the management information; and a comparing unit adapted to determine whether the original version of the management information and the decrypted management information are in a predetermined relationship with each other and validate the data storage when the determination result is affirmative. The encrypted version of the management information is decrypted by the decryption unit in response to controls by the controlling unit.

When the data storage has two or more encrypted versions of the management information stored thereon, the verification system may read all of the encrypted versions of the management information out of the data storage and decrypt them. In such a case, the data storage may be validated only when the original version of the management information is in a certain relationship with all of the two or more pieces of the decrypted management information.

Alternatively, when the data storage has two or more encrypted versions of the management information stored thereon that have been encrypted with different encryption schemes, the controlling unit of the verification system comprises a feature to allow for corresponding decryption of the encrypted information. The system may decrypt all of the encrypted versions of the management information and validate the data storage only when the original version of the management information is in a certain relationship with all of the two or more pieces of decrypted management information.

A method for distributing content according to an embodiment of the present invention that solves the above-mentioned problems is a method performed in a content distribution server adapted to deliver content data to a user terminal in response to a request from the user terminal connected to the content distribution server through a network. This method comprises requesting the user terminal to send an original version of management information and an encrypted version of the management information, the original and encrypted versions of the management information being stored on the data storage in the user terminal; receiving the original and encrypted versions of the management information; decrypting the received encrypted version of the management information; determining whether the received original version of the management information is in a predetermined relationship with the decrypted management information; and validating the management information when the determination result is affirmative, wherein a predetermined request from the user terminal is fulfilled when the determination result is affirmative. Validation of the management information is a prerequisite for fulfilling a predetermined request from the user terminal. It does not exclude the possibility of imposing any additional requirement upon the user in response to the request from the user terminal. Instead of "fulfilling the request from the user terminal when the verification result is affirmative", delivery of the content data to the user terminal may be limited when the verification result is negative.

The above-mentioned content distribution method may further comprise determining whether the management information is contained in a predetermined management information list. Fulfillment of a predetermined request from the user terminal may be limited when the determination result is affirmative.

It is possible to limit the delivery of the content data to a given user by means of preparing the predetermined management information list as a list of the management information of the data storage to which delivery of the content data file is limited.

A content distribution server according to an embodiment of the present invention that solves the above-mentioned problems is a content distribution server adapted to deliver content data to a user terminal in response to a request from the user terminal connected to the content distribution server through a network. This content distribution server comprises an interface for the transmission of data to and from the content distribution server through the network; a controlling unit that makes a request to send an original version of management information and an encrypted version of the management information through the interface, the original and encrypted versions of the management information being stored on the data storage in the user terminal, and that controls decryption of the received encrypted version of the management information; and a comparing unit adapted to determine whether the original version of the management information and the decrypted management information are in a predetermined relationship with each other and validate the management information when the determination result is affirmative, wherein the controlling unit limits the delivery of the content data to the user terminal when the verification result is negative.

Another content distribution server according to an embodiment of the present invention that solves the above-mentioned problems is a content distribution server adapted to deliver content data to a user terminal in response to a request from the user terminal connected to the content distribution server through a network. This content distribution server comprises an interface for the transmission of data to and from the content distribution server through the network; a controlling unit that makes a request to send an original version of management information and an encrypted version of the management information through the interface, the original and encrypted versions of the management information being stored on the data storage in the user terminal, and that controls decryption of the received encrypted version of the management information; a first comparing unit adapted to determine whether the original version of the management information and the decrypted management information are in a predetermined relationship with each other and validate the management information when the determination result is affirmative; a management information database which is a collection of pieces of management information for the data storage to which delivery of the content data is limited; and a second comparing unit adapted to determine whether the management information of which validity has been verified is contained in a predetermined management information database, wherein the controlling unit permits the delivery of the content data when the verification result obtained by the first comparing unit is affirmative and when the determination result obtained by the second comparing unit is negative.

The affirmative result of the verification obtained by the first comparing unit and the negative result of the determination obtained by the second comparing unit are prerequisites for permitting the delivery of the content data to the user terminal. These results do not exclude the possibility of imposing any additional requirement upon the user in response to the request from the user terminal.

A computer program according to an embodiment of the present invention that solves the above-mentioned problems makes an information processing system carry out the method for manufacturing the data storage described above.

Another computer program according to an embodiment of the present invention that solves the above-mentioned problems makes an information processing system carry out the jobs of reading an original version of management information and an encrypted version of the management information out of the data storage to be verified; decrypting the encrypted version of the management information; comparing the read original version of the management information and the decrypted management information; and validating the verified data storage when the comparison result indicates that the read original version of the management information and the decrypted management information are in a predetermined relationship with each other.

Yet another computer program according to an embodiment of the present invention that solves the above-mentioned problems makes a content distribution server, which is adapted to deliver content data to a user terminal in response to a request from the user terminal connected to the content distribution server through a network, carry out the jobs of requesting delivery of an original version of management information and an encrypted version of the management information stored in a data storage of the user terminal; receiving the original and encrypted versions of the management information; decrypting the received encrypted version of the management information; determining whether the received original version of the management information and the decrypted management information are in a predetermined relationship with each other; and validating the management information when the determination result is affirmative, wherein fulfillment of any request from the user terminal is restricted when the verification result is negative.

A data storage having the computer program according to an embodiment of the present invention that solves the above-mentioned problems stored thereon has the above-mentioned computer program stored thereon.

### Brief Description of Drawings

Fig. 1 is a view illustrating a structure of data representing a product ID, in which the data is stored on the data storage;
Fig. 2 is a block diagram of a data storage and an information processing system according to an embodiment of the present invention;
Fig. 3 is a flow chart of a process for verifying the validity of the data storage according to the present invention; and
Fig. 4 is a schematic block diagram of a content distribution system according to the present invention.

### Best Mode for Carrying Out the Invention

An embodiment of the present invention is described with reference to the drawings.

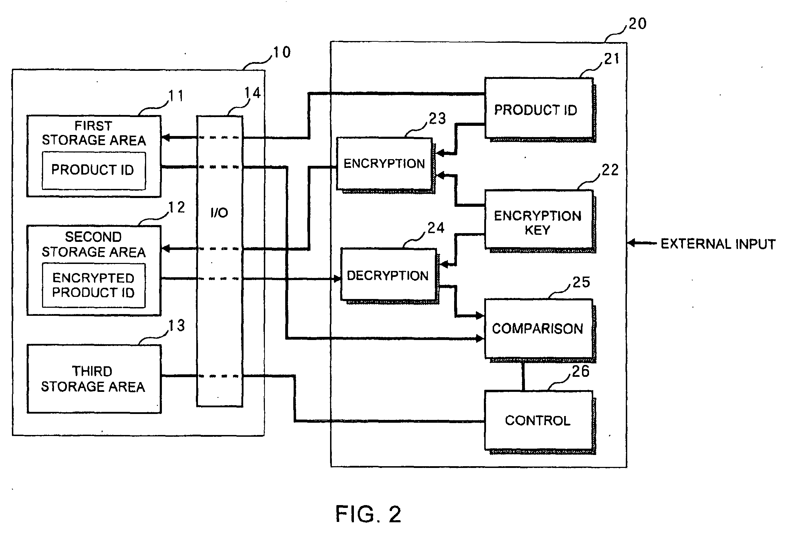

Fig. 2 is a block diagram of a data storage 10 and an information processing system 20 according to an embodiment of the present invention

As shown in Fig. 2, a data storage 10 comprises a first storage area 11, a second storage area 12, a third storage area 13, and an input/output unit 14. The first storage area 11 stores management information, i.e., the information used to manage the data storage 10 itself. The management information in this embodiment is a product ID of the data storage 10. It is noted that any one of other user distinguishing identifications (alphanumerical characters, symbols, or combinations thereof) that serves as a unique identifier for each data storage may equally be used as the management information. The second storage area is for storing an encrypted product ID while the third storage area is for storing programs, image data, audio data, and other ordinary information.

An information processing system 20 comprises a product ID holding unit 21, an encryption key holding unit 22, an encrypting unit 23, a decrypting unit 24, a comparing unit 25, and a controlling unit 26. The product ID holding unit 21 is for holding product IDs assigned to and to be assigned to the data storage. The encryption key holding unit 22 is for holding an encryption key or keys to be used for encrypting and decrypting the product IDs. As will be described more in detail below, the encrypting unit 23 encrypts, with an encryption key, a product ID supplied from the product ID holding unit 21 to produce an encrypted product ID. The decrypting unit 24 decrypts the encrypted product ID with the encryption key. The comparing unit 25 receives a non-encrypted, original version of the product ID from the data storage 10 and a corresponding decrypted product ID to compare them with each other. More specifically, the comparing unit 25 compares the original version of the product ID read out of the data storage 10 with the corresponding product ID decrypted by the decrypting unit 24 to determine whether they match with each other. The controlling unit 26 controls operations of the whole information processing system 20.

The functional features 21 to 26 may be implemented by computer programs and/or data stored on, for example, a hard disk device or a semiconductor memory in cooperation with a fundamental control program (operating system) on a computer, i.e., the information processing system 20 in this embodiment. Alternatively, the functional features 21 to 26 may be achieved by a central processing unit directly executing an appropriate program stored on, for example, a read-only memory.

For the sake of simplicity and clarity, some connections are omitted and others emphasized in Fig. 2. The controlling unit 26 controls the functional features 21 to 25 as well as the data storage 10. It should be noted that the data storage 10 is not always connected to the information processing system 20. More specifically, the data storage 10 may have a constant connection with the information processing system 20 when it is implemented as a hard disk device and provided on the same computer as the information processing system 20. However, the data storage 10 may be a portable one such as a CD-ROM or a magnetic tape. In such a case, the data storage 10 is connected to the information processing system 20 only when it becomes necessary.

### <Operations of the embodiment>

Next, operations of the data storage 10 and the information processing system 20 are described.

### <Writing-in>

Writing the original and encrypted versions of the product ID into the data storage 10 is described first. An operator connects the data storage 10 to the information processing system 20 and enters a command to write the product ID through an external input device (not shown) connected to the information processing system 20. The information processing system 20 retrieves a product ID from the product ID holding unit 21 in response to the command received through the external input device and then writes the retrieved product ID as the original version of the product ID into the first storage area in the data storage 10. In addition, the information processing system 20 reads the encryption key out of the encryption key holding unit 22. The selected product ID and the encryption key are supplied to the encrypting unit 23. The encrypting unit 23 encrypts the product ID with the encryption key to produce an encrypted version of the product ID. Subsequently, the information processing system 20 writes the encrypted version of the product ID into the second storage area in the data storage 10. Encryption can be done by the encrypting unit 23 with a known encryption scheme such as a common key encryption algorithm such as Data Encryption Standard (DES), Triple-DES, MARS, and RC6. It is apparent that the present invention may also make use of a public key encryption algorithm.

When appropriate and necessary, the controlling unit 26 makes an information recording device (not shown) connected to the information processing system 20 write programs, image data, audio data, and any other information into the third storage area in the data storage 10.

### <Verification>

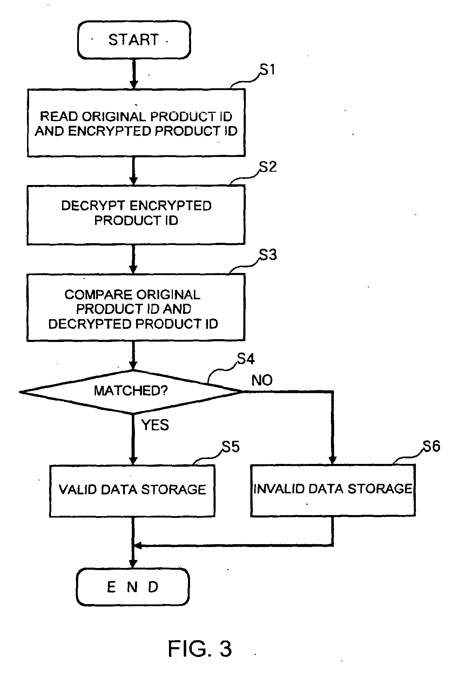

Referring to Fig. 3, such operations are described that are used to verify the validity of the data storage 10 having the product ID and the encrypted product ID stored thereon. When the data storage 10 having the assigned product ID is connected to the information processing system 20, the information processing system 20 reads the non-encrypted, original version of the product ID and the corresponding encrypted version of the product ID out of the first and second storage areas, respectively (step S1) The original version of the product ID is supplied to the comparing unit 25 while the encrypted version of the product ID is supplied to the decrypting unit 24. The decrypting unit 24 decrypts, with the encryption key obtained from the encryption key holding unit 22, the encrypted version of the product ID read out of the second storage area (step S2) to produce a decrypted version of the original product ID. The decrypted product ID is then supplied to the comparing unit 25. The comparing unit 25 compares the decrypted product ID and the original product ID read out of the first storage area (step S3) to determine whether they match with each other (step S4). The original product ID should coincide with the decrypted product ID when the data storage 10 under verification is a valid one (e.g., without any alteration of the product ID). If the determination step S4 is affirmative (YES), the controlling unit 26 considers the data storage as a valid one (step S5) and carries out read/write operation(s) from and to the third storage area in the data storage 10. If the determination step S4 is negative (NO), the controlling unit 26 prohibits or restricts access to the third storage area because of failure of verification indicating that it is an invalid data storage (step S6).

Thus, the combination of the data storage and the information processing system having the above-mentioned configurations makes it possible to detect alteration of the product ID, if any, and verify the validation of the data storage.

As apparent from the above, the embodiment of the present invention is associated with the information processing system 20 comprising the six functional features 21 to 26. However, the product ID holding unit 21 and the encrypting unit 23 may be on a separate computer from the one where the decrypting unit 24 and the comparing unit 25 locate. In other words, verification of the data storage may be carried out independently of the location where the product ID is originally assigned to and written on a given data storage, as long as the encryption key holding unit 22 is available from the decrypting unit 24 and the decrypting unit 24 is controlled accordingly. Therefore, any possible combinations of the functional features embodied herein and equivalents thereof are also contemplated by the present invention.

### <Practical Applications>

### <Content Server>

Electronic distribution or delivery of computer programs and electronic content, such as electronic books, audio and/or video data, has increased with the growth of computer networks including the Internet. Such electronic distribution is often called as "content distribution service". Many current content distribution services target unspecified users and provide electronic content to them on a non-payment basis. It is well expected that distribution of the electronic content on a payment basis (the selling of content through the network to authorized users) would be increasing as the network-based business gains popularity.

The network-based distribution of the electronic content has the advantage of minimizing distribution costs. However, it is difficult to restrict distribution of the electronic content properly once it is released to the network. For example, a user who has purchased content via a network may make unauthorized copies of the content and deliver them to a third person(s). It is difficult to prevent unauthorized copying of the content as far as it is made in a universal data format such as the MP3 and PDF formats for audio and electronic books, respectively. On the other hand, the unauthorized copying can somewhat be prevented by making the content in a special data format and distributing a purpose-built playback-only software product under strict control. However, introduction of the special data format is less practical when considering versatility of services and speed of technological changes.

Thus, there are continuing demands for a technique that allows a content provider to control distribution of the content and to limit use of the content by a user who made fraudulent use of it. The present invention offers a solution for this by providing a content distribution system and a content distribution server in which the data storage 10 each having a unique product ID and an encrypted version of the same product ID stored thereon is delivered to registered users and the content is to be delivered only to those users. Configurations of such content distribution system and the content distribution server are now described with reference to the drawing. The term "content distribution system" as used herein refers to a system which delivers or distributes electronic content, such as electronic books, music, movie, and computer software products, via a network to. user terminals. The term "content distribution server" as used herein means a server comprising a database on which the content is stored, which the server delivers the content to a user terminal in response to a request from a user.

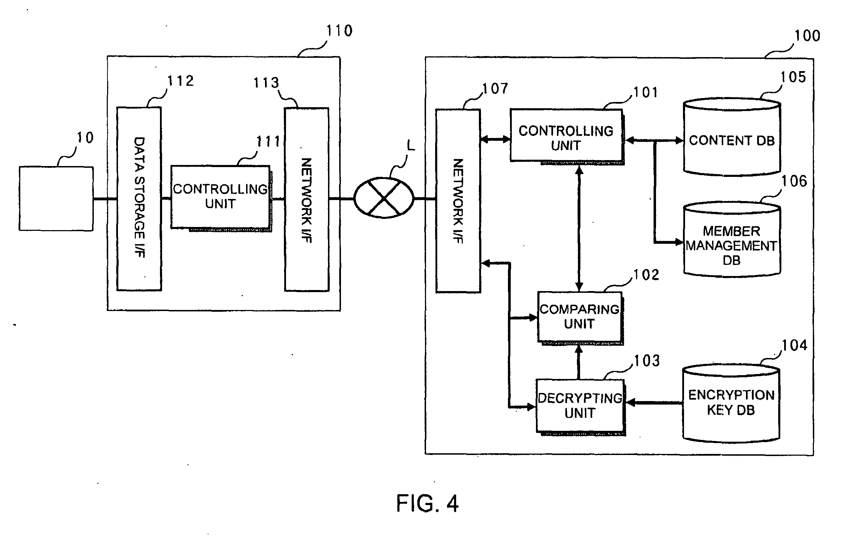

Fig. 4 is a schematic block diagram illustrating a configuration of a content distribution system according to an embodiment of the present invention. The content distribution system of this embodiment comprises a content distribution server 100 and a user terminal 110 connected to each other via a network L. The network L may be the Internet or any other suitable networks interconnecting the distribution server 100 and the user terminal 110.

The content distribution server 100 comprises a controlling unit 101, a comparing unit 102, a decrypting unit 103, an encryption key database 104, a content database 105, a member management database 106, and a network interface (I/F) 107. The controlling unit 101 controls functions and operations of the whole content distribution server 100. The content database 105 is a collection of electronic contents to be distributed to users while the member management database 106 is a collection of data used to manage registered members who are entitled to receive the content. The network I/F 107 is for the transmission of data to and from the user terminal 110 through the network L.

As in the case described in conjunction with Fig. 2, the functional features 101 to 106 of the content distribution server 100 may be implemented by computer programs and/or data stored on, for example, a hard disk device or a semiconductor memory in cooperation with a fundamental control program (operating system) on a computer, i.e., an information processing system having a communication function. Alternatively, the functional features 101 to 106 may be achieved by a central processing unit (not shown) directly executing an appropriate program stored on, for example, a read-only memory.

The comparing unit 102 is equivalent in function to the comparing unit 25 in the above-mentioned information processing system 20. Likewise, the decrypting unit 103 is equivalent in function to the decrypting unit 24 in the above-mentioned information processing system 20. The encryption key database 104 is equivalent in function to the encryption key holding unit 22 in the above-mentioned information processing system 20 and stores encryption keys applicable to product IDs.

The user terminal 110 comprises a controlling unit 111, a data storage interface (I/F) 112, and a network interface (I/F) 113. The controlling unit 111 controls functions and operations of the whole user terminal 110. The data storage I/F 112 is used to connect the data storage 10 with the user terminal 110. The network I/F 113 is for the transmission of data to and from the content distribution server 100 through the network L. The user terminal 110 may be any one of appropriate terminals having a network communication function and capable of reading/writing the data storage 10, such as a personal computer, a gaming device, or an entertainment device.

Next, operations of the illustrated content distribution system are described. When a user accesses the content distribution server 100 from the user terminal 110, the content distribution server 100 receives through the network L a non-encrypted, original version of the product ID and an encrypted version of the same product ID from the first and second storage areas, respectively in the data storage connected to the user terminal 110. The decrypting unit 103 decrypts the encrypted version of the product ID read out of the second storage area with an encryption key obtained from the encryption key database 104 to produce a decrypted product ID. The decrypted version of the product ID is supplied to the comparing unit 102 where it is compared with the original version of the product ID read out of the first storage area in the data storage. The comparing unit 102 determines whether the two versions of the product ID match with each other. The original product ID should coincide with the decrypted product ID when the data storage 10 is the one distributed to an authorized or registered member. In other words, the affirmative result indicates that the owner of the data storage 10 is the legitimate member. When validated, the controlling unit 101 permits the user to download the content stored on the content database 105 in response to a request from that user. The content may be delivered to the user along with a certain user distinguishing identification unique for the receiver, such as the product ID of the data storage, embedded into the content. It is preferable that the user distinguishing identification be embedded into the content by using digital watermarking technology such as IBM DataHiding™ but an ordinary data format may also be used for this embedding purpose. Details about how to use the user distinguishing identification will be described below.

On the other hand, if the determination result is negative, the owner of the data storage 10 is not validated as a legitimate member. The controlling unit 101 prevents or limits access by that user to the content stored on the content database 105 accordingly. As apparent from the above, the content distribution system having the above-mentioned configuration makes it possible to offer the content distribution service only to the legitimate members. A third party is not permitted to use the content distribution service even with a product ID of a data storage of one of the legitimate members.

It should be noted that even a legitimate member may make unauthorized copies of the downloaded content and distribute them among third parties. Alternatively, the unauthorized copies may be made available on an Internet web site of the user. Embedding the user distinguishing identification into the content facilitates finding out a user who made such fraudulent use of the content.

More particularly, an administrator of the content distribution system retrieves the embedded user distinguishing identification from an unauthorized copy of the content when he or she happens to notice it. From this user distinguishing identification, the administrator can single out the user who downloaded the content. The administrator of the content distribution server 100 then enters into the member management database 106 information used to prohibit or limit future delivery of the content to the user in question. For example, the administrator may create a black list on the member management database 106 and put on the black list the product ID of the data storage of which owner is the alleged user. The controlling unit 101 in the content distribution server 100 looks up the black list on the member management database 106 when the comparison result obtained by the comparing unit 102 is affirmative and checks whether the product ID in question is contained therein. When finding that the product ID in question is in the black list, the controlling unit 101 prevents or limits access by that user to the content stored on the content database 105. If the product ID is not in the black list, the controlling unit 101 permits the user to download the content stored on the content database 105 in response to a request from that user. Therefore, it is possible to impose certain sanctions upon the legitimate member when he or she used the content illegally.

While the present invention has thus been described in conjunction with the specific embodiments thereof, the present invention is not limited thereto. For example, in the above-mentioned embodiments, the encrypted version of the product ID read out of the data storage is decrypted in the information processing system and the decrypted product ID is compared with the non-encrypted original version of the product ID. However, the original product ID read out of the data storage may be encrypted in the information processing system and compared with the encrypted version of the product ID supplied from the data storage. In either case, what is required is to verify that the original and encrypted versions of the product ID are in a predetermined relationship that are stored in sets in the data storage and should normally be matched with each other.

In the above-mentioned embodiments, the data storage has only one encrypted version of the product ID stored thereon. However, two or more encrypted versions of the product ID may be stored thereon. In this event, the product IDs may be encrypted with two different encryption keys and the respective encrypted versions are stored in different storage areas in the data storage. To verify whether the data storage is valid or not, the encrypted versions of the product ID are read out of the storage areas and are decrypted with the corresponding encryption keys. The decryption results are compared with the original version of the product ID.

The product ID may be encrypted with two or more different encryption schemes and the encrypted versions of the product ID may be stored separately on the data storage. To verify whether the data storage is valid or not, the encrypted versions of the product ID are read out of the storage areas and are decrypted with the corresponding encryption schemes. The decryption results are then compared with the original version of the product ID.

In order to store the product ID with two or more encryption keys, the necessary number of encryption keys should be prepared previously to perform encryption of the product ID with the respective encryption keys. The resulting encrypted versions of the product ID may then be written into different storage areas in the data storage. In order to store the product ID with two or more encryption schemes, the information processing system may have encryption units (encryption functions) that are available and suitable for the respective encryption schemes. The product ID is encrypted in these encryption units and the resulting encrypted versions of the product ID are stored in the different storage areas in the data storage. To verify whether the data storage is valid or not, the encrypted versions of the product ID may be read out of the respective storage areas and decrypted with the corresponding encryption schemes. The decryption results may then be compared with the original version of the product ID. In this event, a single decrypting unit may be able to handle or use the two or more encryption schemes. Alternatively, independent decryption units may be provided for each of the encryption schemes used.

Advantages of using the different encryption keys or encryption schemes are as follows. A malicious user may alter both the original and encrypted versions of the product ID but it is extremely difficult from the temporal and technical viewpoints to break, decipher or cryptanalyze two or more different encryption keys or encryption schemes. Validity of the data storage can thus be verified with a higher probability when all of the decrypted versions of the product ID match the original one. Again, a malicious user may alter both the original and encrypted versions of the product ID. Any mismatch between the decrypted and original versions of the product ID indicates a possibility of unauthorized or illegal alteration of either one or both of the product IDs. However, the mismatch is not enough to specify which is the valid and which is not. Even under such circumstances, the decrypted versions of the product ID are likely to be valid when some of them are matched. Therefore, it is easier to identify the proper product ID.

An information processing system (computer) loads the computer program according to the present invention from the computer-readable data storage and executes that program to achieve the writing of the product ID and the encrypted version of the product ID into the data storage 10 as well as the validity verification of the data storage 10 on which the product ID and the encrypted version of the product ID are stored.

The above-mentioned content distribution server may be implemented by the computer program according to the present invention that is carried out by a computer having a communication function. In this case, the functional features in the embodiments are realized as a computer program alone or in combination with a fundamental control program or an operating system which the computer program is stored on a computer-accessible (i.e., recordable and readable) data storage such as a hard disk device or a semiconductor memory.

As apparent from the above, the data storage as well as the method and the apparatus therefor according to the present invention ensure detection of alteration, if any, of the management information and verify the validity of the data storage. Furthermore, the content distribution system according to the present invention allows a content provider to control distribution of the content and to limit delivery of the content to a user who made fraudulent use of it.

## Claims

1. A data storage comprising:
a first storage area for storing an original version of management information; and
a second storage area for storing an encrypted version of the management information.

2. A method for manufacturing a data storage comprising the steps of:
writing an original version of management information into a first storage area in the data storage; and
writing an encrypted version of the management information into a second storage area in the data storage.

3. A method carried out in an information processing system comprising:
reading an original version of management information stored on the data storage to be verified and an encrypted version of the management information;
decrypting the encrypted version of the management information; and
comparing the original version of the management information and the decrypted management information,
wherein the data storage subjected to verification is determined as valid when the comparison result indicates that the original version of the management information and the decrypted management information are in a predetermined relationship with each other.

4. A method as claimed in Claim 3, wherein the encrypted version of the management information is encrypted with an encryption scheme using secret key information and the decryption is performed with that secret key information.

5. A system for verifying the validity of a data storage having a first storage area for storing an original version of management information and a second storage area for storing an encrypted version of the management information, said system comprising:
a controlling unit adapted to read the original version of the management information and the encrypted version of the management information out of the data storage and control decryption of the encrypted version of the management information; and
a comparing unit adapted to determine whether the original version of the management information and the decrypted management information are in a predetermined relationship with each other and validate the data storage when the determination result is affirmative.

6. A method for managing a user terminal performed in a content distribution server adapted to deliver content data to a user terminal in response to a request from the user terminal connected to the content distribution server through a network, said method comprising:
requesting the user terminal to send an original version of management information and an encrypted version of the management information, the original and encrypted versions of the management information being stored on the data storage in the user terminal;
receiving the original and encrypted versions of the management information;
decrypting the received encrypted version of the management information;
determining whether the received original version of the management information is in a predetermined relationship with the decrypted management information; and
validating the management information when the determination result is affirmative, wherein
a predetermined request from the user terminal is fulfilled when the verification result is affirmative.

7. A method as claimed in Claim 6, further comprising:
determining whether the management information of which validity has been verified is contained in a predetermined management information list, wherein
fulfillment of a predetermined request from the user terminal is limited when the determination result is affirmative.

8. A method as claimed in Claim 7, wherein the predetermined management information list is a collection of management information for the user terminal(s) to which delivery of a content data file is to be restricted.

9. A content distribution server adapted to deliver content data to a user terminal in response to a request from the user terminal connected to the content distribution server through a network, said content distribution server comprising:
an interface for the transmission of data to and from the content distribution server through the network;
a controlling unit that makes a request to send an original version of management information and an encrypted version of the management information through said interface, the original and encrypted versions of the management information being stored on the data storage in the user terminal, and that controls decryption of the received encrypted version of the management information; and
a comparing unit adapted to determine whether the original version of the management information and the decrypted management information are in a predetermined relationship with each other and validate the management information when the determination result is affirmative, wherein
said controlling unit limits the delivery of the content data to the user terminal when the verification result is negative.

10. A content distribution server adapted to deliver content data to a user terminal in response to a request from the user terminal connected to the content distribution server through a network, said content distribution server comprising:
an interface for the transmission of data to and from the content distribution server through the network;
a controlling unit that makes a request to send an original version of management information and an encrypted version of the management information through said interface, the original and encrypted versions of the management information being stored on the data storage in the user terminal, and that controls decryption of the received encrypted version of the management information;
a first comparing unit adapted to determine whether the original version of the management information and the decrypted management information are in a predetermined relationship with each other and validate the management information when the determination result is affirmative;
a management information database which is a collection of pieces of management information for the data storage to which delivery of the content data is limited; and
a second comparing unit adapted to determine whether the management information of which validity has been verified is contained in a predetermined management information database, wherein
said controlling unit permits the delivery of the content data when the verification result obtained by said first comparing unit is affirmative and when the determination result obtained by said second comparing unit is negative.

11. A computer program for use in making an information processing system carry out the jobs of:
writing an original version of management information into a first storage area in a data storage; and
writing an encrypted version of the management information into a second storage area in the said data storage.

12. A computer program for use in making an information processing system carry out the jobs of:
reading an original version of management information and an encrypted version of the management information out of the data storage to be verified;
decrypting the encrypted version of the management information;
comparing the read original version of the management information arid the decrypted management information; and
validating the verified data storage when the comparison result indicates that the read original version of the management information and the decrypted management information are in a predetermined relationship with each other.

13. A computer program for use in making a content distribution server, which is adapted to deliver content data to a user terminal in response to a request from the user terminal connected to the content distribution server through a network, carry out the jobs of:
requesting delivery of an original version of management information and an encrypted version of the management information stored in a data storage of the user terminal;
receiving the original and encrypted versions of the management information;
decrypting the received encrypted version of the management information;
determining whether the received original version of the management information and the decrypted management information are in a predetermined relationship with each other; and
validating the management information when the determination result is affirmative, wherein fulfillment of any request from the user terminal is restricted when the verification result is negative.

14. A computer-readable data storage having the computer program as claimed in Claims 11-13 stored thereon.
